# EUROPÄISCHE PATENTSCHRIFT

(11) **EP 2 456 063 B1**
(45) Veröffentlichungstag und Bekanntmachung des Hinweises auf die Patenterteilung: **11.09.2019**
(21) Anmeldenummer: 11009205.3
(22) Anmeldetag: 21.11.2011
(51) Int. Cl.: H02P 6/34, H02P 23/14, H02P 3/22, H02P 5/74

(54) **Erfassung der Energieverteilung in einer Maschine mit mehreren Antrieben**
Energy distribution recording in a machine with several drives
Détection de la répartition d'énergie dans une machine à plusieurs entraînements

(30) Priorität: 23.11.2010 DE 102010052041
(43) Veröffentlichungstag der Anmeldung: 23.05.2012
(73) Patentinhaber: SCHNEIDER ELECTRIC AUTOMATION GMBH, 97828 Marktheldenfeld (DE)
(72) Erfinder: Stephan, Iulia Dana, 97837 Erlenbach (DE); Amrhein, Mario, 97737 Gemünden am Main (DE); Nesser, Peter, 97840 Hafenlohr (DE)
(74) Vertreter: Pöhner, Wilfried Anton

(56) Entgegenhaltungen:
- EP-A2- 1 818 207
- DE-A1- 10 215 822
- DE-A1-102007 026 012
- DE-A1-102007 043 875
- DE-A1-102009 042 905
- US-A1- 2010 060 216

## Beschreibung

Die Erfindung bezieht sich auf eine Maschine mit mehreren, regelbaren, elektrischen Antrieben, bestehend aus einer Mechanik und mehreren Wechselstrommotoren zum Antrieb der Mechanik und wenigstens einer Gleichrichtereinheit, durch die eine Gleichspannung U dc aus der Netzspannung U netz erzeugbar ist und je einem Inverter, durch den aus der Gleichrichtereinheit ein dreiphasiger Strom I mot zur Versorgung je eines Wechselstrommotors entnehmbar ist und je einem Regelbaustein zur Ansteuerung eines Inverters, durch den der aktuelle Wert des Stromes I mot in wenigstens einer Phase des Wechselstrommotors aufnehmbar ist und der aktuelle Wert der Gleichspannung U dc aufnehmbar ist und der aktuelle Wert der vom Wechselstrommotor aufgenommenen Leistung P mot el und die in einem bestimmten Zeitraum aufgenommene elektrische Leistung W mot el ermittelbar und in einem Antriebsdatenspeicher einlesbar ist.

Unter dem aktuellen Eindruck schwindender Energieressourcen und deshalb steigender Energiekosten ist es derzeit von besonderem Interesse, den Leistungsbedarf und den Energieverbrauch von Maschinen zu begrenzen und - wo irgend möglich - zu reduzieren. Je größer die Maschine und damit auch die Anzahl und/oder die Leistung der jeweiligen Antriebe sind, desto interessanter ist es, einigermaßen genau zu wissen, an welchen Orten der Maschine welche Energiemenge benötigt wird.

Dann kann beurteilt werden, ob der Produktionsprozess tatsächlich derartige Leistungen benötigt, oder ob eine Veränderung des Verlaufes der Maschinenfunktion wie z.B. ihrer Taktzeiten womöglich einen Zuwachs an Wirtschaftlichkeit ergibt. Aus einer derartigen Leistungsbetrachtung sind auch Hinweise auf konstruktionsbedingte oder funktionsbedingte Spitzenbelastungen oder gar Überlastungen abzuleiten.

Bei produktionstechnisch miteinander verketteten Antrieben, wie z.B. bei der Bearbeitung von bahnförmigem Material, kann es Antriebe geben, die kurzzeitig oder dauernd bremsen müssen und deshalb vorübergehend oder dauernd als Generator wirken und elektrische Energie abgeben. Es ist zu diagnostizieren, ob die Gesamtkosten niedriger sind, wenn diese Energie "entsorgt" wird oder wenn sie zur anderweitigen Verwendung weitergeleitet wird.

Um auf diese und andere Energieprobleme mit ausreichender Genauigkeit eingehen zu können, ist es unerlässlich, die aktuellen Leistungs- und Energiewerte zu kennen.

Auf aktuellem Stand der Technik sind dafür spezielle, elektronische Leistungsmessgeräte bekannt. Sie erfordern zur Ermittlung von Spannungen z.B. die Zugänglichkeit von Messpunkten und für die Strommessung z.B. das Auftrennen von Kabeln zum Einschleifen eines Messwiderstandes oder ein Kabel, das von der Messzange eines induktiven Messgerätes umschlossen werden kann sowie zur Erfassung von Drehzahlen ggf. den Zugang zu einer sich bewegenden Mechanik zum Andrücken oder Anbringen eines Drehzahlgebers oder anderen Sensors. Es sind also nicht nur separate Messgeräte, sondern auch passende Sensoren sowie der Aufwand für deren Installation und Auswertung erforderlich.

Um diesen Aufwand zu ersparen, sind verschiedene Konzepte bekannt, die Leistungs- und Energiewerte in dem Stromrichter und/oder der Ansteuerung von elektrischen Antrieben zu erfassen, sodass Leistungs- und Energiewerte unmittelbar auslesbar sind.

Zum Beispiel beschreibt die Patentschrift DE 60 2004 004 496 T2 die Erfassung der Leistung eines Asynchronmotors, der durch einen Frequenzumformer regelbar ist. Dazu werden der Strom, die Spannung und die Frequenz der Ströme ermittelt, mit denen der Asynchronmotor angesteuert wird, um daraus die aufgenommene elektrische Leistung zu berechnen.

Wenn vom jeweils angeschlossenen Motor eine genaue Kennlinie des in den jeweiligen Betriebszuständen abgegebenen Drehmomentes bekannt ist, kann aus diesen Daten auch auf die abgegebene mechanische Leistung rückgeschlossen werden. Dazu muss diese Kennlinie im Rechner nachgebildet werden, was einen höheren, einmaligen Aufwand erfordert und laufend einen größeren Teil der Rechnerkapazität im Frequenzumformer bindet.

Dadurch entsteht der Nachteil, dass ein Stromrichtern für drehzahlregelbare Antriebe mit einer derartigen Messeinrichtung einen erhöhter Bedarf an Rechenkapazität hat, der den Einbau eines schnelleren und/oder leistungsfähigeren Mikroprozessors samt entsprechend verstärkter Peripherie erfordert, was insbesondere bei relativ sehr kleinen Antrieben die Kosten des Stromrichters überproportional erhöht.

Ein weiterer Nachteil ist, dass trotz all diesem Aufwand das Ergebnis relativ ungenau ist, da die exakte Drehzahl des Motors nicht bekannt ist.

In der Offenlegungschrift DE 10 2007 026 012 A1 ist eine Druckmaschine mit mehreren Antrieben beschrieben, in der während des Betriebs der Antriebe auftretende Lastspitzen von einem dem Antrieb vorgeschalteten Pufferspeicher abgefedert werden und so nicht für die Dimensionierung eines die einzelnen Antriebe versorgenden Zwischengleichspannungskreises sowie des die Gleichspannung bereitstellenden Gleichrichters in Betracht gezogen werden müssen. Zur Erfüllung dieser Aufgabe überwacht eine Steuerungselektronik die Leistungsaufnahme des Antriebs und passt die periodengemittelte Leistungsaufnahme an den Bedarf des Antriebs an, wobei ein anhand eines Bewegungsprofils bestimmter erwarteter Energiebedarf berücksichtigt wird.

Hier findet also eine lokale Bestimmung der aufgenommenen elektrischen Leistung jedes Antriebs statt, jedoch wird weder die tatsächlich abgegebene mechanische Leistung bzw. Energie bestimmt, noch sind die Informationen für einen Maschinenbenutzer sicht- oder auswertbar, etwa zu dem Zweck eine Optimierung des Wirkungsgrades der Maschine während eines Prozesses durchzuführen.

Die Offenlegungsschrift DE 10 2009 042 905 der Firma Fanuc Ltd. Offenbart ein mechanisches System mit einer Mehrzahl Verstärkergruppen, die je eine Gemeinsame Spannungsquelleneinheit besitzen, welche wiederum individuellen Antrieben, genauer Servomotoren, zugeordnete Spannungsquelleneinheiten speisen. Der dortigen Lehre nach wird zu einem Zeitpunkt für jeden der Motoren der aufgenommene Strom sowie die Motordrehzahl bestimmt und daraus die aufgenommene Leistung berechnet. Da das Ziel ist, die Energierückgewinnung der einzelnen Motoren, der Verstärkergruppen sowie des Gesamtsystems zu überwachen und den Fluss der Rückgewonnen Leistung zu verfolgen, werden bei einer Aufintegration der so bestimmten Leistungen nur Zeitpunkte berücksichtigt, bei denen die Leistung ein negatives Vorzeichen hat. Aus Strom- und Spannungsmessungen für ganze Verstärkergruppen bzw. das Gesamtsystem kann eine Rückgewonnene Energie der Verstärkergruppen bzw. des Gesamtsystems bestimmt werden und durch Subtraktion der Summe aller rückgewonnenen Energiebeträge der jeweiligen Untereinheiten der Verbleib der rückgewonnenen Energie teilweise nachvollzogen werden.

Zum einen sieht dieses System sieht weder eine Bestimmung des Wirkungsgrades einzelner Komponenten noch von Komponentengruppen oder des Gesamtsystems vor und zum anderen ist auch der Leistungsfluss nicht exakt, sondern nur für eine Übereinheit als Ganzes, z.B. eine Verstärkergruppe möglich. Ebenso wenig werden thermische Verluste berücksichtigt, weder in den Motoren der Antriebe noch in der Leistungselektronik der Spannungsquellen.

Auf diesem Hintergrund hat sich die Erfindung die Aufgabe gestellt, für die Regelbausteine von Servoantrieben, auch mit relativ sehr kleiner Nennleistung des Motors eine zusätzliche Ausstattung zu entwickeln, mit der die aktuellen Werte des Leistungsbedarfes und des Energieverbrauches kurzzeitig, als Spitzenwert oder als Mittelwert im einzelnen Antrieb, in Antriebsgruppen und/oder für die gesamte Maschine erfassbar, speicherbar und auswertbar sind, ohne dafür zusätzliche Sensoren anbringen zu müssen und ohne eine nennenswerte Erhöhung der Gesamtkosten für das System in Kauf nehmen zu müssen.

Als Lösung ist in Anspruch 1 definiert.

Die Erfindung beschränkt sich also auf permanent erregte Synchronmotoren, die auf aktuellem Stand der Technik sehr zahlreich als Servoantriebe im Maschinenbau eingesetzt werden. Sie sind grundsätzlich mit einem Geber ausgestattet, der auf der Motorwelle angeordnet ist oder mit einem durch den Motor bewegten Teil der Maschine verbunden ist. Dieser Geber wird zumeist von der Lageregelung ausgewertet, um die Winkelposition der jeweiligen Achse zu erfassen. Der Geber wird aber auch vom Stromrichter des jeweiligen Motors benutzt und zwar werden seine Signale im Reglerbaustein erfasst und ausgewertet, woraus u.a. auch die Winkelgeschwindigkeit ω mot zu berechnen ist.

Falls die Berechnung der Leistungen und Energien nicht so sehr genau sein muss, kann es unter Umständen auch ausreichen, den Drehzahlistwert mit dem Drehzahl-Sollwert gleich zu setzen. Das Ergebnis wird dann natürlich durch die tatsächliche Regelabweichung zwischen Ist- und Sollwert in seiner Genauigkeit reduziert. Für Maschinen mit einer sehr geringen Dynamik kann ein so ermittelter Wert auch ausreichende Näherungswerte für die Leistungs- und Energiewerte liefern.

Der Stromrichter enthält u.a. einen Regelbaustein, der einen Inverter ansteuert, welcher den angeschlossenen Wechselstrommotor mit dem erforderlichen Wechselstrom versorgt.

Ein weiteres, wesentliches Merkmal eines permanent erregten Synchronmotors ist, dass er in allen zulässigen Betriebsbereichen ein konstantes Verhältnis zwischen dem einfließenden Strom und dem daraus erzeugten Drehmoment an der Motorwelle aufweist. Seine "Drehmomentkonstante kT" gilt also mit einer hier vollauf ausreichenden Genauigkeit für alle Drehzahlen und für alle Belastungen.

Ein derart einfacher, linearer Zusammenhang reduziert die erforderlichen Berechnungen auf eine Multiplikation.

Die Hinterlegung von Kennlinien oder gar Kennlinienscharen wie bei einem Asynchronmotor ist nicht erforderlich. Vielmehr reicht es aus, bei der Inbetriebnahme des Reglerbausteins den kT-Wert des jeweils angeschlossenen Synchronmotors einzugeben und abzuspeichern.

Zur Berechnung der Leistung wird als weiterer Wert der Strom I mot in den zumeist drei Energiezuleitungen des Motors benötigt. Diesen Wert muss der Reglerbaustein für eine ordnungsgemäße Regelung des Synchronmotors sowieso aufnehmen und verarbeiten.

Es ist also ein wesentliches Merkmal der Erfindung, dass die mechanische Leistung des jeweiligen Synchronmotors aus der Multiplikation des Stromes I mot, der Winkelgeschwindigkeit ω mot und der Drehmomentenkonstante kT berechenbar ist.

Diese Werte sowie die auf einen bestimmten Zeitraum, wie z.B. die für den Reglerbaustein oder den Zwischenkreisrechner kürzest mögliche Zeit bezogene Energiemenge sind erfindungsgemäß in einem Antriebsdatenspeicher abspeicherbar und können von einer zentralen Leistungserfassungsstelle abgerufen und ausgewertet werden.

In einer Ausführungsvariante sind diese Werte auch bestimmten Zeiträumen und Zeitpunkten fester zuordenbar.

Ausgehend von dieser grundlegenden Leistungs- und Energieberechnung ermöglicht es die Erfindung, einen kompletten Überblick über den Leistungsbedarf und den Energiefluss in der gesamten Maschine aufzubauen. Es ist das besondere Verdienst der Erfindung, eine Anordnung zu präsentieren, die für alle wesentlichen Punkte des Antriebssystems sowohl die Augenblickswerte als auch die Mittelwerte über einen beliebig wählbaren Zeitraum hinweg verfügbar macht.

Bei vielen Maschinen bedingt der Fertigungsprozess - z. B. bei der Verarbeitung von bahnförmigem Material - oder ein hohes Massenträgheitsmoment der rotierenden mechanischen Elemente, dass ein Servoantrieb zeitweise oder sogar dauerhaft eine Mechanik nicht antreibt, sondern von der Mechanik getrieben wird. Er hat also die Aufgabe, gegenüber dieser Mechanik ein Bremsdrehmoment aufzubringen. Dabei wird vom Motor generatorisch Energie erzeugt, die über den Inverter des Stromrichters in den Gleichspannungszwischenkreis zurückgespeist wird und dort dessen Spannung U dc erhöht.

Oberhalb einer gewissen Grenze der Spannung U dc würde eine weitere Erhöhung zu dauerhaften Zerstörungen führen. Deshalb wird ein Bremswiderstand als Verbraucher an die Gleichspannung U dc des Zwischenkreises oberhalb einer bestimmten Spannung geschaltet, wodurch er die generatorisch von wenigsten einem Synchronmotor erzeugte Leistung P mech in Wärme umwandelt, die z.B. durch Kühlluft oder Kühlwasser abtransportiert wird oder die an einem anderen Ort der Maschine als Prozesswärme wieder verwendet wird.

Um diesen Energiestrom zu erfassen, wird in die Gleichrichtereinheit ein Zwischenkreisrechner eingefügt, der die jeweiligen Werte der Gleichspannung U dc und des in die Bremswiderstände fließenden Stromes I brems erfasst und daraus die vom Bremswiderstand abgegebene thermische Bremsleistung P brems berechnen kann. Diese Werte werden dann in einem zusätzlichen Zwischenkreisdatenspeicher in der Gleichrichtereinheit abgespeichert. In einer Ausführungsvariante wird zusätzlich der jeweilige Zeitpunkt der Messung hinterlegt. Diese Daten oder Datenpaare sind von einer zentralen Leistungserfassungsstelle abrufbar und dort auswertbar.

Um die vom Bremswiderstand erzeugte thermische Energie wirtschaftlich sinnvoll einzusetzen, wird sie an einen Wärmeverbrauchsort der Maschine transferiert, an dem der Maschinenprozess thermische Energie erfordert. Dort wird sie in den Wärmehaushalt eingespeist, indem z.B. ein Gas oder eine Flüssigkeit den Bremswiderstand umspült und dann in einem Rohr zum Wärmeverbrauchsort fließt und dort die Wärmeenergie z.B. über einen Wärmetauscher dem Maschinenprozess zugeführt wird.

In ein Abbild des gesamten Energieflusses einer Maschine gehört natürlich auch dieser Energiestrom mit hinein. Deshalb ist es sinnvoll, dass der externe (und teure) Energiezufluss zu den Wärmeverbrauchsorten der Maschine um den internen (mehrkostenfreien) Energiezufluss reduziert wird. Dazu ist es sinnvoll, dass die Steuerung des gesamten Leistungsbedarfes an diesen Wärmeverbrauchsorten - wie z.B. von maschineneigenen Heizungs- und Kühlaggregaten - ebenfalls von der erfindungsgemäßen, zentralen Leistungserfassungsstelle überwacht und gesteuert wird.

Um die Leistungs- und Energiedaten aus den Zwischenkreisrechnern und den Reglerbausteinen in die Leistungserfassungsstelle zu transferieren, sind beliebige Übertragungsarten anwendbar. Z.B. können alle Zwischenkreissteuerungen und alle Reglerbausteine sternförmig mit der zentralen Leistungserfassungsstelle verbunden werden. Eine derartige sternförmige Struktur wäre jedoch relativ sehr teuer, was der Aufgabenstellung zuwider läuft.

Deshalb schlägt die Erfindung als eine Ausführungsform vor, dass zur Übermittlung dieser Daten derjenige Datenbus mitbenutzt wird, der zum Transfer der für den Maschinenprozess erforderlichen Soll- und Istwerte alle Reglerbausteine mit der Zentralsteuerung verbindet.

Die Erfindung als eine Ausführungsform schlägt vor, dass auch die Leistungserfassungsstelle sowie die Zwischenkreisrechner an diesen Datenbus angeschlossen werden. Für die Übermittlung der Istwerte von Leistung und Energie können dann die regelmäßig zwischen den zyklischen Übermittlungen der Soll- und Istwerte zur Verfügung stehenden Pausen genutzt werden. Sie werden in diesen Zeiträumen aus dem Antriebsdatenspeicher des Reglerbausteines sowie aus dem Zwischenkreisspeicher des Zwischenkreisrechners ausgelesen und an die Leistungserfassungsstelle transferiert.

Um die Strukturen des vorhandenen Datenbusses voll umfänglich nutzen zu können, empfiehlt die als eine Ausführungsform, dass die Leistungserfassungsstelle nicht eine separate Baugruppe ist, sondern vollständig in die Zentralsteuerung integriert ist.

Dann kann in der Leistungserfassungsstelle der vollständige Energiefluss in allen Antrieben und in allen Gleichrichtereinheiten dargestellt werden. Dazu zählen die Mittelwerte der Leistungen in bestimmten Zeitabschnitten und/oder die Spitzenwerte der Leistungen und/oder die Mittelwerte und/oder die Spitzenwerte der Leistungen innerhalb eines zyklisch wiederkehrenden Intervalls.

Interessante Leistungsarten sind u.A. die von einem Wechselstrommotor aufgenommene und abgegebene mechanische Leistung P mech und/oder die von einem Wechselstrommotor aufgenommene elektrische Leistung P mot el und/oder die von einer Gleichrichtereinheit aufgenommene elektrische Leistung P dc el und/oder die in einem Bremswiderstand in Wärme umgewandelte thermische Leistung P brems und/oder die als Verlust abgestrahlte Wärme.

Diese Werte sind jeweils ermittelbar und/oder speicherbar und/oder können an andere Geräte, wie z.B. einen PC weiter gereicht werden.

Ab einer gewissen Größenordnung dieser Energiemenge kann es sogar sinnvoll sein, die Temperatur der Kühlluft oder der Kühlflüssigkeit durch eine Wärmepumpe auf ein höheres Niveau zu bringen. Das erfordert zwar zusätzliche Energie für den Antrieb der Wärmepumpe, kann aber in der Gesamtenergiebilanz durch einen erheblich besseren Wirkungsgrad der Übertragung dieser Wärme an den Wärmeverbraucher der Maschine trotzdem wirtschaftlich sinnvoll sein.

Wie bereits mehrfach erwähnt, kann der Maschinennutzer oder eine externe Ablaufsteuerung in der Leistungserfassungsstelle wählen, ob sie die Leistungswerte und/oder den Energiefluss der gesamten Maschine oder nur von Teilen erfassen und darstellen soll. Deshalb schlägt die Erfindung als eine Ausführungsform vor, dass wählbar ist, für welche Wechselstrommotoren und/oder Gleichrichtereinheiten der Leistungsbedarf oder der Energiefluss abgebildet werden soll. Die ausgewählten Wechselstrommotoren und/oder Gleichrichtereinheiten können dann zu sog. aktiven Sets zusammengefasst werden.

Dabei kann auch gewählt werden, ob die abgegebene thermische Energie P therm und/oder die von den Wechselstrommotoren an die Mechanik abgegebene mechanische Energie P mech und/oder die von ihnen aufgenommene elektrische Energie P mot el und/oder die von den Gleichrichtereinheiten aufgenommene elektrische Energie P dc el erfasst und gespeichert werden soll
Die von der gesamten Maschine abgestrahlte thermische Energie besteht - abgesehen von den Abstrahlverlusten der Prozesswärme und den Verlusten aus mechanischer Reibung - aus der Summe der von den Bremswiderständen abgestrahlten thermischen Energie P brems und den von den Wechselstrommotoren sowie von den Invertern, den Gleichrichtern und der zugehörigen Elektronik abgestrahlten thermischen Energie. Diese Summe wird als P therm bezeichnet. Dabei ist die von den Wechselstrommotoren abgestrahlte Wärme die Differenz aus der aufgenommenen elektrischen Energie P mot el und der abgegebenen mechanischen Leistung P mech.

Es ist ein Merkmal der Erfindung als eine Ausführungsform, dass in der Leistungserfassungsstelle vorwählbar ist, für welche Zeitpunkte oder für welche Zeitabschnitte oder für welche zyklisch wiederkehrende Zeitpunkte oder Zeitabschnitte die Leistungs- und Energiewerte erfassbar und speicherbar sind. Dadurch hat der Nutzer z.B. die Möglichkeit, einen bestimmten Maschinenteil unter genauere Beobachtung zu nehmen. So kann er z.B. für einen ihn interessierenden Abschnitt der Maschine in größeren, zeitlichen Abständen, jedoch bei der Fertigung eines gleichen Produktes oder der Durchführung eines gleichen Vorganges die jeweilige mechanische Leistung P mech aufzeichnen. Aus dem Vergleich dieser Daten kann auf Alterungs- oder Ermüdungserscheinungen der Mechanik rückgeschlossen werden. Eine weitere, sinnvolle Aufgabe ist die Optimierung des Stromflusses im Gleichstromzwischenkreis. So ist es z.B. bei einer Maschine mit mehreren Achsen möglich, dass ein erster Antrieb oft beschleunigt und zum etwa gleichen Zeitpunkt ein zweiter Antrieb stark bremsen muss. Wenn es der Prozessablauf der Maschine zulässt, dass der Zeitpunkt der starken Beschleunigung des ersten Antriebes mit dem Zeitpunkt der starken Verzögerung des zweiten Antriebes zusammengelegt wird, so kann anhand der Leistungs- und Energiewerte der betreffenden Antriebe kontrolliert werden, ob die generatorisch vom ersten Antrieb abgegebene Energie wieder zur Beschleunigung des zweiten oder anderer Antriebe verwendet wird.

Ein weiterer Vorteil für den Anwender ist, dass er aus einer Anordnung auch den Verlauf der Spitzenwerte über die Zeit hinweg ablesen kann. Aus dieser Kurve kann er die Abschnitte größter Belastung entnehmen und überprüfen, ob diese Spitzenwerte eventuell durch kleinere Änderungen im Prozess der gesamten Maschine reduziert oder gar eliminiert werden können, ohne wesentliche Zeitverluste beim Taktzyklus der Maschine hinzunehmen. Wenn dieses gelingt, dann werden nicht nur die Energiekosten reduziert, sondern auch die Abnutzung der Maschine, insbesondere bei den elektrischen Motoren und der beweglichen Mechanik vermindert.

Durch die Kombination der ermittelten Leistungswerte mit den jeweiligen Zeitpunkten lassen sich die Leistungen ermitteln. Deshalb kann zusätzlich zu oder anstelle von den Leistungswerten auch der jeweilige Wert der von einem Wechselstrommotor abgegebenen mechanischen Energie W mech und/oder der von einem Wechselstrommotor aufgenommenen elektrischen Energie W mot el und/oder der von einer Gleichrichtereinheit aufgenommenen elektrischen Energie W dc el und/oder der von wenigstens einem Wechselstrommotor und von der versorgenden Gleichrichtereinheit abgestrahlten thermischen Energie W therm berechnet und gespeichert werden.

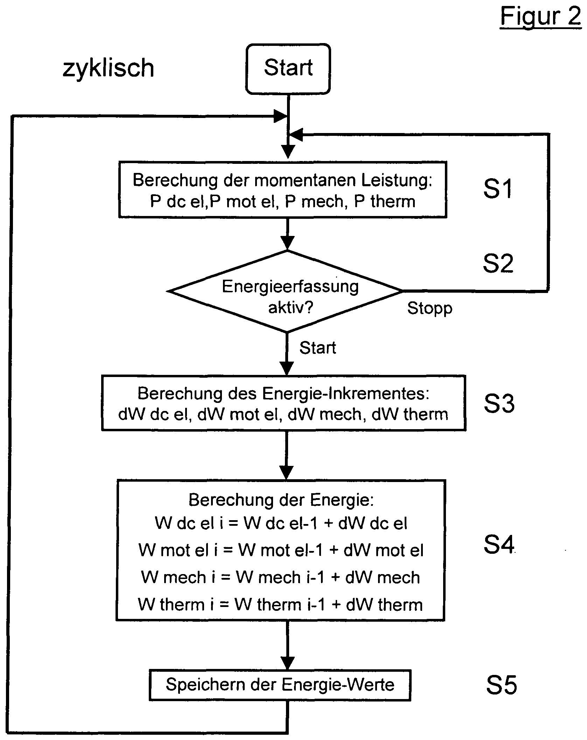

Für eine erfindungsgemäße Maschine schlägt die Erfindung zur Erfassung und Speicherung der Leistungs- und Energiewerte das folgende Verfahren vor, das in der Figur 2 auch graphisch dargestellt ist: Im ersten Schritt erfolgt die mögliche Berechnung aller momentanen Leistungswerte P mot el, P mech und P therm der Regelbausteine und der Zwischenkreisrechner selbsttätig, da es zu bevorzugen ist, dass diese Funktion bereits werksseitig parametriert ist. Da jedoch bei der Parametrierung zur Anpassung an die jeweilige Anwendung diese Funktion möglicherweise deaktiviert sein könnte, sollte sicherheitshalber in einem zweiten Schritt geprüft werden, ob die Energieerfassung tatsächlich noch aktiv ist.

Im dritten Schritt führt jeder Regelbaustein und jeder Zwischenkreisrechner in der für ihn kürzesten möglichen Zeitspanne jeweils eine inkrementelle Berechung der vom Motor aufgenommenem Energie-Inkremente dW mot el und der von der Gleichrichtereinheit aufgenommene elektrischen Energie dW dc el und der vom Motor abgegebene mechanischen Energie-Inkremente dW mech und der von den Motoren und den Bremswiderständen in den Gleichrichtereinheiten abgestrahlten thermischen Energieinkremente dW therm durch.

Im vierten Schritt werden die Energiewerte so lange aufintegriert, bis der vom Nutzer oder einer externen Steuerung festgelegte Zeitabschnitt abgelaufen ist. Im fünften Schritt werden diese Energie-Werte dann gespeichert.

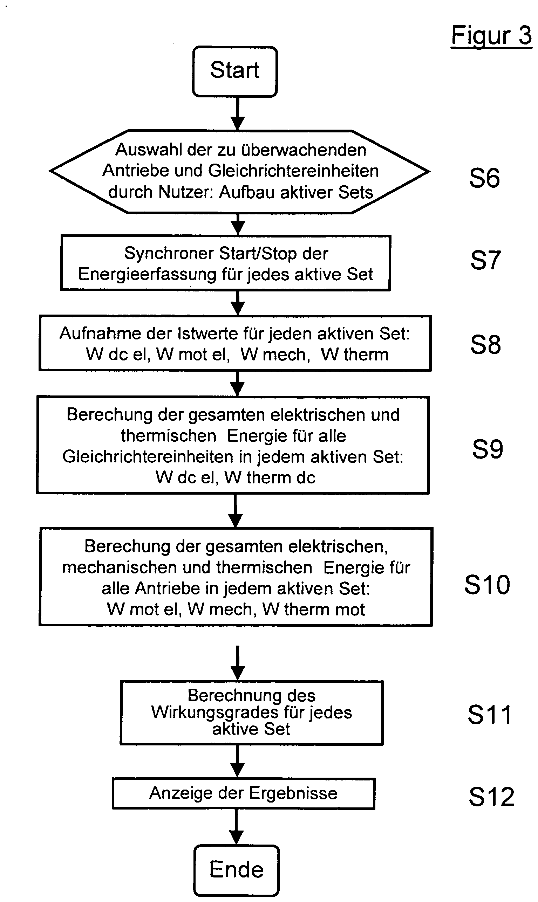

Eine erfindungsgemäß ausgestattete Maschine ermöglicht die Erfassung weiterer Leistungs- und Energiewerte und schlägt dafür die folgenden weiteren Schritte vor, die in der Figur 3 auch graphisch dargestellt sind:
Im sechsten Schritt wählt der Nutzer oder eine externe, an die Maschine angeschlossene Steuerung die zu überwachenden Antriebe, bestehend aus je einem Wechselstrommotor und einem Inverter und einem Regelbaustein, sowie die zu überwachenden Gleichrichtereinheiten aus und gruppiert sie zu sog. "aktiven Sets".

Im siebten Schritt wird jedem aktiven Set ein zeitsynchroner Start- und Stopp-Befehl zur Energieerfassung gegeben. Im achten Schritt werden die Istwerte für die von den Wechselstrommotoren abgegebene mechanische Energie W mech und/oder die von den Wechselstrommotoren aufgenommene elektrische Energie W mot el und/oder die von wenigstens einem Wechselstrommotor und von der ihn versorgenden Gleichrichtereinheit abgestrahlten thermischen Energie W therm für jeden aktiven Set aufgenommen.

Im neunten Schritt wird für alle Gleichrichtereinheiten in jedem aktiven Set die aufgenommene elektrische Energie W dc el und die abgestrahlte thermische Energie W therm dc berechnet.

Im zehnten Schritt wird für alle Antriebe in jedem aktiven Set die vom jeweiligen Motor aufgenommene elektrische Energie W mot el erfasst und aufsummiert. Die gesamte von ihnen abgestrahlte thermische Energie W therm mot ist die Differenz aus der aufgenommenen elektrischen Energie W mot el und der von den Motoren abgegebenen mechanischen Energie W mech.

Darauf basierend kann im elften Schritt der Wirkungsgrad für jedes aktive Set berechnet werden und das Ergebnis im zwölften Schritt angezeigt werden.

Im Folgenden sollen weitere Einzelheiten und Merkmale der Erfindung anhand von Beispielen näher erläutert werden. Diese sollen die Erfindung jedoch nicht einschränken, sondern nur erläutern. Es zeigt in schematischer Darstellung:
- Figur 1: Antriebsstruktur einer Maschine mit drei Antrieben
- Figur 2: Ablaufschema für die Erfassung der einzelnen Energiewerte
- Figur 3: Ablaufschema zur Gewinnung der Übersichtsstruktur der Energieverteilung

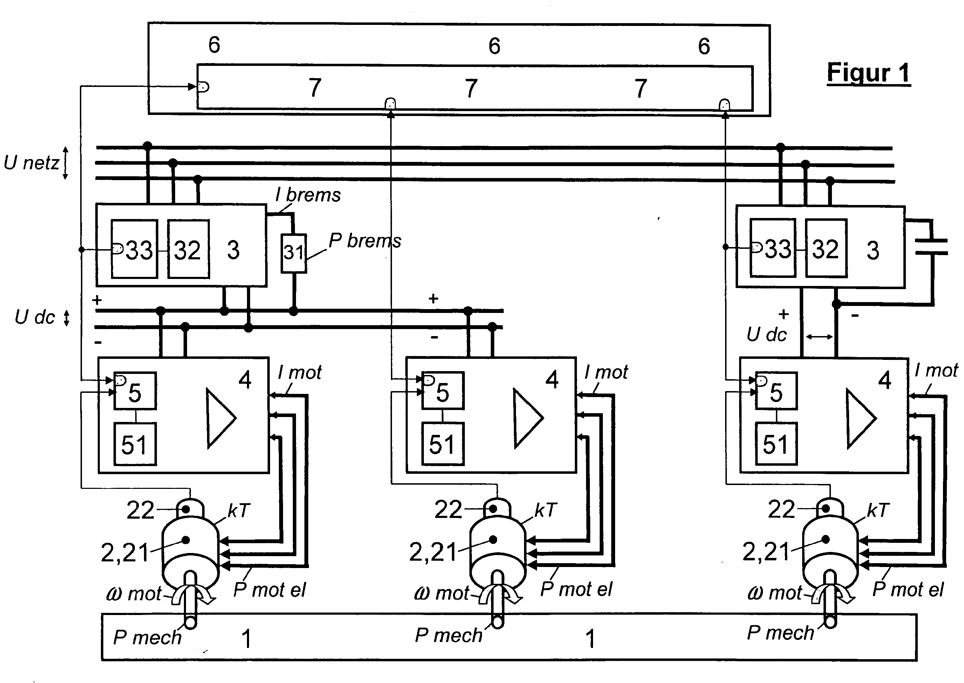

In **Figur 1** ist als Blockschaltbild die Antriebsstruktur einer Maschine mit drei Antrieben dargestellt. Jeder Antrieb besteht jeweils aus einem Regelbaustein 5 auf dem Inverter 4, welcher einen dreiphasigen Wechselstrom bildet, der den Wechselstrommotor 2 versorgt. Dadurch kann er seine Motorwelle mit der Winkelgeschwindigkeit ω mot drehen und die Leistung P mech an die Mechanik 1 abgeben, die am unteren Bildrand als ein Block symbolisiert ist.

In der hier gezeigten Ausführungsvariante sind als Wechselstrommotoren 2 ausschließlich Synchronmotoren 21 eingesetzt. Natürlich erlaubt es die Erfindung auch, andere Motorprinzipien zu verwenden. Die Genauigkeit der ermittelten Daten ist dann besonders hoch, wenn die Motoren - wie hier die Synchronmotoren 21 - mit einem Geber 22 ausgerüstet sind, der mit der Motorwelle oder einem davon angetriebenen Maschinenelement der Mechanik 1 verbunden ist.

Im hier gezeigten Ausführungsbeispiel sind die Geber 22 direkt auf das abtriebsferne Ende der Motorwelle aufgesetzt und an das Motorgehäuse angeflanscht. Über die Geber 22 kann der Regelbaustein 5 die genaue Winkelposition des Wechselstrommotors 2 erfassen und daraus dessen Drehzahl berechnen.

Die hier eingesetzten, permanent erregten Synchronmotore 21 weisen ein lineares Verhältnis zwischen dem Strom I mot in den drei Phasen und dem abgegebenen Motordrehmoment auf. Dieses Verhältnis wird durch die Drehmomentkonstante kT beschrieben.

In Figur 1 ist gezeigt, dass der Wechselstrommotor 2 mit einem dreiphasigen Wechselstrom versorgt wird, wobei in jeder Phase jeweils der Strom I mot fließt. Damit fließt dem Motor die elektrische Leistung P mot el zu. Dieser Wechselstrom wird im Inverter 4 aus dem Gleichspannungszwischenkreis mit der Spannung U dc gebildet.

Der Übersichtlichkeit halber ist in Figur 1 nicht eingezeichnet, dass der Wechselstrom zur Versorgung des Wechselstrommotors 22 im Inverter 4 durch Pulsweitenmodulation gebildet wird, wobei die jeweiligen Stromimpulse über eine Umdrehung des Motors hinweg zusammen mit der Induktivität der Wicklungen im Stator des Synchronmotors 2 einen etwa sinusförmigen Strom I mot bilden, der im Motor das jeweils benötigte Motordrehmoment erzeugt. Die Stärke des Stroms im Inverter 4 wird vom Regelbaustein 5 überwacht, indem er den Strom I mot in den Phasen des Motors erfasst und die Breite - also die Zeitdauer - der Stromimpulse entsprechend einstellt.

Ebenfalls erfasst der Regelbaustein 5 die Gleichspannung U dc im Gleichspannungszwischenkreis, was in Figur 1 auch nicht eingetragen ist.

In Figur 1 ist klar zu erkennen, dass die Signale des Gebers 22 auf der Welle des Wechselstrommotors 2 in den Regelbaustein 5 übertragen werden. Daraus kann die Winkelgeschwindigkeit ω mot des Motors 2 berechnet werden.

Es ist eine wichtige Grundlage der Erfindung, dass die Werte des Phasenstroms I mot, der Winkelgeschwindigkeit ω mot und der Drehmomentkonstante kT des Synchronmotors 21 ausreichen, um die vom Motor abgegebene Leistung P mech zu berechnen.

Um dafür einen Rechenbaustein zu schaffen, der die zuvor genannten Werte nicht ein zweites Mal einlesen muss, ist in der hier dargestellten Ausführungsvariante diese Rechenfunktion mit in den Regelbaustein 5 integriert. Dafür ist eine entsprechende Vergrößerung der Rechnerkapazität und der dafür nötigen Peripherie erforderlich. Damit berechnet der Regelbaustein 5 die vom Motor jeweils abgegebene Leistung P mech.

Ebenfalls kann er die vom Motor aufgenommene elektrische Leistung P mot el berechnen, da er ja auch die Spannung U dc des Gleichspannungszwischenkreises erfasst. In Figur 1 ist der Übersichtlichkeit halber nicht dargestellt, dass diese Leistungsdaten jeweils zusammen mit dem Zeitpunkt ihrer Berechnung erfasst werden.

In Figur 1 ist deutlich zu sehen, dass diese Daten in einen speziellen Speicher - dem Antriebsdatenspeicher 51 in unmittelbarer Verbindung mit dem Regelbaustein 5 - eingelesen werden.

In Figur 1 ist gut nachvollziehbar, wie die Inverter 4 über die Gleichrichtereinheiten 3 aus dem Netz die benötigte elektrische Energie erhalten. In Figur 1 ist oben das dreiphasige Netz mit drei horizontalen Stromleitern und der Spannung U netz zwischen den Stromleitern eingezeichnet. Daran sind im gezeichneten Ausführungsbeispiel zwei Gleichrichtereinheiten 3 angeschlossen. Sie haben die Aufgabe, den dreiphasigen Wechselstrom des Netzes in eine Gleichspannung U dc umzuwandeln.

Dabei kann eine Gleichrichtereinheit 3 auch mehrere Antriebe versorgen, wie in Figur 1 für den linken und den mittleren Antrieb gezeigt ist. Ganz rechts ist ein einzelner Antrieb dargestellt, der als Einzelachse von einer eigenen Gleichrichtereinheit 3 versorgt wird.

Jede Gleichrichtereinheit 3 sorgt im Betrieb während des größten teils der Zeit für einen Energiefluss, der vom Netz in den Gleichspannungszwischenkreis gerichtet ist und dort die Spannung U dc erzeugt. Aus dem Gleichspannungszwischenkreis entnimmt der Inverter 4 Gleichstrom. Der Energiefluss verläuft bei den meisten Betriebszuständen in Figur 1 also vom Netz aus nach unten hin bis zur Mechanik 1.

Wie erwähnt gibt es jedoch in der Mechanik 1 auch Betriebszustände, bei denen kinetische Energie, die von einem ersten Wechselstrommotor 2 in die Mechanik 1 eingespeist worden ist, an einen zweiten Wechselstrommotor 2 weitergeleitet wird, der daraufhin von der Mechanik 1 angetrieben wird. Insbesondere dann, wenn der zweite Wechselstrommotor 2 ein Synchronmotor 21 ist, wandelt er diese mechanische Energie wieder zurück in elektrische Energie, die über den Inverter 4 in den Gleichspannungszwischenkreis zurückspeist, sodass dessen Spannung U dc ansteigt. Es fließt also ein Strom in die Gleichrichtereinheit 3 zurück.

Es gibt Ausführungsvarianten der Gleichrichtereinheit 3, die diese Energie in das Netz zurückspeisen können. Eine solche, rückspeisefähige Gleichrichtereinheit ist jedoch sehr aufwändig.

Eine Alternative dazu ist in Figur 1 eingezeichnet, nämlich dass die zurückfließende elektrische Energie in einem Kondensator gespeichert wird, der an der rechten Kante der rechten Gleichrichtereinheit 3 gezeigt ist. In der Gleichrichtereinheit 3 ist der Strom erfassbar, der in diesen Kondensator hinein fließt. Ein Zwischenkreisrechner 33 kann daraus zusammen mit der jeweiligen Zwischenkreisgleichspannung U dc die jeweilige Leistung und unter Berücksichtigung der Zeit auch die Energie berechnen, die in diesen Kondensator herein fließt. Wenn diese Energiemenge bei entsprechendem Bedarf des Inverters 4 teilweise oder vollständig wieder daraus entnommen wird, erfasst der Zwischenkreisrechner 33 das ebenfalls. Die so ermittelten Daten werden in dem Zwischenkreisdatenspeicher 32 hinterlegt.

Eine andere Alternative zur "Entsorgung" der generatorisch von den Synchronmotoren 21 über den Inverter 4 in die Gleichrichtereinheit 3 zurück gespeisten Energie wird in Figur 1 an der linken Gleichrichtereinheit 3 gezeigt. Hier ist nicht ein Kondensator, sondern ein Bremswiderstand 31 parallel zur Gleichspannung U dc des Gleichspannungszwischenkreises angeschlossen. Wenn die Spannung U dc über einen bestimmten Schwellwert hinaus ansteigt, so wird in der Gleichrichtereinheit 3 der Bremswiderstand 31 als Verbraucher an den Gleichspannungszwischenkreis angeschlossen. Dadurch fließt der Strom I brems und wandelt die elektrische Leistung im Bremswiderstand 31 in die thermische Leistung P brems um. Von dort wird sie über Luftkühlung oder Wasserkühlung abgeführt.

In dem zusätzlichen Zwischenkreisrechner 33 in der Gleichrichtereinheit 3 werden diese Leistungsdaten erfasst und im Zwischenkreisdatenspeicher 32 hinterlegt. Als eine Ausführungsvariante sind sie zusammen mit den jeweiligen Erfassungszeitpunkten speicherbar.

Figur 1 zeigt sehr schön eine Übersicht über die gesamte Maschine. Leistungs- und Energiedaten sind in insgesamt zwei Stück Zwischenkreisdatenspeichern 32 und drei Stück Antriebsdatenspeichern 51 hinterlegt. Um diese Daten zu einem Gesamtbild zusammen zu tragen, müssen sie miteinander verknüpft werden. Figur 1 zeigt, dass dafür nicht unbedingt ein eigenes Datennetz eingerichtet werden muss.

Vielmehr ist es eine entscheidende Idee, dass dafür der Datenbus verwendet wird, der sowieso schon vorhanden ist, um die Soll- und Istwerte für den Prozess der Maschine aus der Zentralsteuerung 6 zu den Regelbausteinen 5 und umgekehrt zu transportieren. Die Übertragung von Soll- und Istwerten erfolgt zyklisch. Bei jedem industriellen Kommunikationssystem steht neben der zyklischen Kommunikation noch eine gewisse Bandbreite für die asynchrone Kommunikation zur Verfügung.

Es ist eine wesentliche Idee, diese immer wiederkehrenden Übertragungskapazitäten des Datenbus, die sog. asynchronen Übertragungszeiten, für die Sammlung aller Leistungs- und Energiewerte in einer zentralen Leistungserfassungsstelle 7 zu nutzen. Damit wird nicht nur der Aufwand eines speziellen Netzwerkes für die Leistungsübersicht eingespart, sondern auch eine hohe Sicherheit bei der Datenübertragung erreicht, die für die Soll- und Istwerte des gesamten Maschinenprozesses selbstverständlich ist.

In Figur 1 ist das jeweilige Kommunikationsmodul zur Anbindung an den Datenbus als ein kleines Hufeisen symbolisiert, das an den Schnittstellen zum Datenbus in der Leistungserfassungsstelle 7, den Zwischenkreisrechnern 33 und den Regelbausteinen 5 eingebaut ist.

Dazu zu bemerken ist, dass bei der Erzeugung der Leistungs- und Energieübersicht einer Maschine diese Kommunikationsmodule nur in den Gleichrichtereinheiten 3 eine zusätzliche Baugruppe sind. Die Figur 1 zeigt sehr deutlich, dass ansonsten die Leistungserfassungsstelle 7 ein komplettes Abbild des Leistungsbedarfes und des Energieflusses in der gesamten Maschine geben kann, ohne das dafür ein nennenswerter Mehraufwand in der Antriebsstruktur erforderlich ist.

In **Figur 2** ist der genaue Ablauf der Erfassung der Einzelwerte der momentanen Leistung und der in den kürzest möglichen Messzeitabschnitten fließenden inkrementellen Energie dW mot el, dW mech und dW therm wiedergegeben.

In diesem Ablaufschema ist sehr schön zu erkennen, dass zwar eine automatische Erfassung aller Leistungs- und Energiedaten in der Grundparametrierung des Stromrichters vorgesehen ist, aber sicherheitshalber im Schritt 2 noch einmal geprüft wird, ob diese Energieerfassung auch wirklich aktiv ist. Wenn nicht, wird durch die Rückverzweigung im Ablaufschema dafür gesorgt, dass sie aktiviert wird. Eine weitere detaillierte Beschreibung der Schritte 1 bis 5 ist bereits zuvor bei der Beschreibung des entsprechenden Verfahrens gegeben worden.

In **Figur 3** sind die weiteren Schritte niedergelegt, die erforderlich sind, um ein vollständiges Bild der Leistungs- und Energiewerte in der gesamten Maschine zu erzeugen. Die Schritte 6 bis 12 sind bereits bei der Beschreibung des entsprechenden Verfahrens ausführlich erläutert worden.

### Bezugszeichenliste 1

- 1: Mechanik der Maschine
- 2: Wechselstrommotor, treibt Mechanik 1 an
- 21: Synchronmotor, permanent erregt, Ausführungsform eines Wechselstrommotors 2
- 22: Geber, mit der Welle eines Wechselstrommotors 2 verbunden
- 3: Gleichrichtereinheit, erzeugt Gleichspannung des sog. Zwischenkreises zur Versorgung der Inverter 4
- 31: Bremswiderstand, an Gleichspannung U dc anschließbar
- 32: Zwischenkreisdatenspeicher, speichert errechnete Leistungswerte und Zeitpunkte
- 33: Zwischenkreisrechner in der Gleichrichtereinheit 3
- 4: Inverter, versorgt Wechselstrommotore 2
- 5: Regelbaustein 5, steuert Inverter 4 an
- 51: Antriebsdatenspeicher im Regelbaustein 5
- 6: Zentralsteuerung, steuert Regelbausteine 5, kann Leistungserfassungsstelle 7 beherbergen
- 7: Leistungserfassungsstelle, zentral, sammelt und wertet Daten aus Antriebsdatenspeicher 51 und Zwischenkreisdatenspeicher 32 aus
- I brems: in die Bremswiderstände 31 abfließender Strom
- I mot: Strom in einer Wicklung des Wechselstrommotors 2
- kT: Drehmomentkonstante eines Synchronmotors 21
- P brems: Bremsleistung, in Bremswiderstand 31 umgewandelt
- P dc el: von Gleichrichtereinheit 3 aufgenommene elektrische Leistung
- P mech: vom Synchronmotor 21 abgegebene oder aufgenommene mechanische Leistung
- P mot el: vom Wechselstrommotor 2 aufgenommene Leistung
- P therm: von Motor 2 und Gleichrichter 3 abgegeb. thermische Leistung
- U dc: Gleichspannung im DC-Zwischenkreis
- U netz: Netzspannung, speist Gleichrichtereinheit 2
- ω mot: Winkelgeschwindigkeit eines Synchron-Motors 21

### Bezugszeichenliste 2

- dW dc el: von einer Gleichrichtereinheit 3 aufgenommenes elektrisches Energie-Inkremente
- dW mech: vom Motor 2 abgegeb. mechanisches Energie-Inkrement
- dW mot el: vom Motor 2 aufgenommene Energie-Inkremente
- dW therm: von den Motoren 2 und von den Bremswiderständen 31 in den Gleichrichtereinheiten abgestrahlte thermische Energieinkremente
- dW brems: von den Bremswiderständen 31 abgestrahlte thermische Energie-Inkremente
- W dc el: von einer Gleichrichtereinheit 3 aufgenommene elektrische Energie
- W mech: vom Wechselstrommotor 2 abgegebene mechanische Energie
- W mot el: vom Wechselstrommotor 2 aufgenommene elektrische Energie
- W therm: vom Wechselstrommotor 2 und von der Gleichrichtereinheit 3 abgegebene thermische Energie
- W brems: von den Bremswiderständen abgestrahlte thermische Energie

## Patentansprüche

1. Maschine mit mehreren, regelbaren, elektrischen Antrieben und Erfassung und Speicherung der Leistungs- und Energiewerte, bestehend aus
- einer Mechanik (1)
- mehreren Wechselstrommotoren (2) zum Antrieb der Mechanik (1)
- wenigstens einer Gleichrichtereinheit (3), durch die eine Gleichspannung U dc aus der Netzspannung U netz erzeugt ist
- je einem Inverter (4) durch den aus der Gleichrichtereinheit (3) ein dreiphasiger Strom I mot zur Versorgung je eines Wechselstrommotors (2) entnommen ist
- je einem Regelbaustein (5) zur Ansteuerung des zugehörigen Inverters (4), der
i. den aktuellen Wert des Stromes I mot in wenigstens einer Phase des Wechselstrommotors (2) aufnimmt
ii. den aktuellen Wert der Gleichspannung U dc aufnimmt
iii. den aktuellen Wert einer vom Wechselstrommotor (2) aufgenommenen Leistung P mot el und eine in einem bestimmten Zeitraum aufgenommene elektrische Leistung W mot el ermittelt und
iv. in einem Antriebsdatenspeicher (52) einliest
**dadurch gekennzeichnet, dass**
- wenigstens ein Wechselstrommotor (2) ein permanent erregter Synchronmotor (21) ist
- ein rotierender elektrischer Geber (22) mit der Welle des Synchronmotors (21) oder mit einem davon angetriebenen Teil der Mechanik (1) verbunden ist
- der Regelbaustein (5) eine Winkelgeschwindigkeit ω mot entweder durch Auswertung der Signale des Gebers (22) oder alternativ aus einem Drehzahlsollwert ableitet
- der Regelbaustein (5) eine vom Synchronmotor (21) abgegebene oder aufgenommene, mechanische Leistung P mech aus den jeweiligen Werten des Stromes I mot, der Winkelgeschwindigkeit ω mot und einer Drehmomentenkonstante kT des Synchronmotors (21) berechnet
- die jeweiligen Werte für P mech in einem jeweilig zugehörigen Antriebsdatenspeicher (52) abgespeichert sind und in Bezug auf einen bestimmten Zeitabschnitt auf eine aufgenommene oder abgegebene Energie W mech berechnet und abgespeichert ist
- die Werte für P mech und W mech von einer zentralen Leistungserfassungsstelle (7) abgerufen und ausgewertet werden, wobei die Leistungserfassungsstelle (7) auch einen Leistungsbedarf maschineneigener Heizungs- und Kühlaggregate erfasst und überwacht.

2. Maschine nach Anspruch 1, **dadurch gekennzeichnet, dass** in der für den Regelbaustein (5) kürzestmöglichen Zeit die abgegebene mechanische Energiemenge berechnet und als vom Motor abgegebenes mechanisches Energie-Inkrement dW mech im Antriebsdatenspeicher (52) abspeichert.

3. Maschine nach einem der vorhergehenden Ansprüche, **dadurch gekennzeichnet, dass** ein jeweiliger Zeitpunkt der Messung der mechanischen Leistung P mech oder des Energieinkrementes dW mech erfasst und im Antriebsdatenspeicher (52) hinterlegt ist.

4. Maschine nach einem der vorhergehenden Ansprüche, **dadurch gekennzeichnet, dass** in der Gleichrichtereinheit (3) ein Zwischenkreisrechner (33) vorhanden ist, der die jeweiligen Werte
- der Gleichspannung U dc
- eines in die Gleichrichtereinheit fließenden Stromes
- eines in einen Bremswiderstand (31) fließenden Stromes I brems erfasst und daraus
- eine in den Bremswiderstand (31) fließende Bremsleistung P brems
- für einen bestimmten Zeitraum eine Bremsenergie W brems
- eine von der Gleichrichtereinheit (3) aufgenommene elektrische Leistung P dc el
berechnet und
- die Werte zusammen mit einem jeweiligen Messzeitpunkt, in einem Zwischenkreisdatenspeicher (32) abspeichert, welcher
- die zentrale Leistungserfassungsstelle (7) abruft und auswertet.

5. Maschine nach einem der Vorhergehenden Ansprüche, **dadurch gekennzeichnet, dass** die Leistungserfassungsstelle (7) in eine Zentralsteuerung (6) integriert ist, welche über einen Datenbus mit den Regelbausteinen (5) und mit den Zwischenkreisspeichern (33) verbunden ist.

6. Maschine nach Anspruch 4 oder 5, **dadurch gekennzeichnet, dass** die Leistungserfassungsstelle (7) einen Teil oder alle der folgenden Werte
- Mittelwerte der Leistungen in bestimmten Zeitabschnitten
- Spitzenwerte der Leistungen in bestimmten Zeitabschnitten
- Mittelwerte oder Spitzenwerte der Leistungen innerhalb eines zyklisch wiederkehrenden Intervalls für einen Teil oder alle der folgenden Größen
- die von einem der Wechselstrommotoren (2) aufgenommene bzw. abgegebene mechanische Leistung P mech
- die von einem der Wechselstrommotoren (2) aufgenommene elektrische Leistung P mot el
- die von einer der Gleichrichtereinheiten (33) aufgenommene elektrische Leistung P dc el
- die in einem der Bremswiderstände (31) in Wärme umgewandelte thermische Leistung P brems
- eine als Verlust abgestrahlte Wärme P therm
- sowie zusätzlich sich für einen bestimmten Zeitabschnitt durch Aufintegration der Leistungswerte ergebende Energiemengen als Energiewerte
ermittelt und speichert oder an andere Geräte, wie z.B. einen PC weiterreicht.

7. Maschine nach einem der Ansprüche 4-6, **dadurch gekennzeichnet, dass** die Leistungserfassungsstelle (7) so vorbereitet ist, dass von einem Maschinennutzer oder von einer externen Ablaufsteuerung vorwählbar ist,
- für welche der Gleichrichtereinheiten (3) die aufgenommene elektrische Leistung P dc el, die aufgenommene elektrische Energie W dc el, die von den Bremswiderständen (31) abgestrahlte thermische Leistung W brems, die insgesamt abgegebene thermische Energie P therm oder die insgesamt abgegebene thermische Energie (P therm) oder die insgesamt abgegebene thermische Leistung W therm und
- für welche Wechselstrommotoren (2) die an die Mechanik (1) abgegebene mechanische Energie P mech, die aufgenommene elektrische Energie P mot el, die an die Mechanik (1) abgegebene mechanische Leistung W mech oder die aufgenommene elektrische Leistung W mot el
zu einem Zeitpunkt, während eines Zeitabschnitts, zu einem zyklisch wiederkehrenden Zeitpunkt oder während zyklisch wiederkehrender Zeitabschnitte erfasst und gespeichert werden und dabei die ausgewählten Wechselstrommotoren (2) oder Gleichrichtereinheiten (3) zu sogenannten aktiven Sets zusammenfassbar sind.

8. Maschine nach Anspruch 7, **dadurch gekennzeichnet, dass** die Zeitpunkte, Zeitabschnitte oder zyklisch wiederkehrende Zeitpunkte oder Zeitabschnitte zu bzw. während derer die Leistungserfassungsstelle (7) Leistungswerte oder, im Falle von Zeitabschnitten, auch Energiewerte, erfasst und speichert, wählbar sind.

9. Verfahren zur Erfassung und Speicherung der Leistungs- und Energiewerte einer Maschine mit mehreren, regelbaren, elektrischen Antrieben, die aufgebaut wurde aus:
- einer Mechanik (1)
- mehreren Wechselstrommotoren (2) zum Antrieb der Mechanik (1)
- wenigstens einer Gleichrichtereinheit (3), durch die eine Gleichspannung U dc aus der Netzspannung U netz erzeugt wird
- je einem Inverter (4) durch den aus der Gleichrichtereinheit (3) ein dreiphasiger Strom I mot zur Versorgung je eines Wechselstrommotors (2) entnommen wird
- je einem Regelbaustein (5) zur Ansteuerung des zugehörigen Inverters (4), der
i. den aktuellen Wert des Stromes I mot in wenigstens einer Phase des Wechselstrommotors (2) aufnimmt
ii. den aktuellen Wert der Gleichspannung U dc aufnimmt
iii. den aktuellen Wert einer vom Wechselstrommotor (2) aufgenommenen Leistung P mot el und eine in einem bestimmten Zeitraum aufgenommene elektrische Leistung W mot el ermittelt und
iv. in einem Antriebsdatenspeicher (52) einliest
- wobei wenigstens ein Wechselstrommotor (2) als ein permanent erregter Synchronmotor (21) gewählt wurde
- ein rotierender elektrischer Geber (22) mit der Welle des Synchronmotors (21) oder mit einem davon angetriebenen Teil der Mechanik (1) verbunden wird
- der Regelbaustein (5) eine Winkelgeschwindigkeit ω mot entweder durch Auswertung der Signale des Gebers (22) oder alternativ aus einem Drehzahlsollwert ableitet
- der Regelbaustein (5) eine vom Synchronmotor (21) abgegebene oder aufgenommene, mechanische Leistung P mech aus den jeweiligen Werten des Stromes I mot, der Winkelgeschwindigkeit ω mot und einer Drehmomentenkonstante kT des Synchronmotors (21) berechnet wird
- die jeweiligen Werte für P mech in einem jeweilig zugehörigen Antriebsdatenspeicher (52) abgespeichert werden und in Bezug auf einen bestimmten Zeitabschnitt auf eine aufgenommene oder abgegebene Energie W mech berechnet und abgespeichert werden
- die Werte für P mech und W mech von einer zentralen Leistungserfassungsstelle (7) abgerufen und ausgewertet werden, wobei die Leistungserfassungsstelle (7) auch einen Leistungsbedarf maschineneigener Heizungs- und Kühlaggregate erfasst und überwacht.
**dadurch gekennzeichnet, dass**
- in einem ersten Schritt die mögliche Berechnung aller momentanen Leistungswerte P dc el, P mot el, P mech und P therm in Regelbausteinen (5) und ggf. Zwischenkreisrechnern (33) der Maschine selbsttätig erfolgt
- in einem zweiten Schritt geprüft wird, ob eine Energieerfassung aktiviert ist
- in einem dritten Schritt jeweils eine Berechnung von Energie-Inkrementen dW dc el, dW mot el, dW mech und dW therm in einer für die Regelbausteine (5) und einer für die Zwischenkreisrechner (33) kürzestmöglichen Zeitspanne erfolgt
- in einem vierten Schritt die berechneten Energieinkremente zu Energiewerten aufsummiert werden und
- in einem fünften Schritt die so erhaltenen Energiewerte gespeichert werden
und danach wieder mit Schritt eins begonnen wird.

10. Verfahren nach Anspruch 9, **dadurch gekennzeichnet, dass**
- in einem sechsten Schritt zu überwachende Antriebe, bestehend aus je einem Wechselstrommotor (2) und einem Inverter (4) und einem Regelbaustein (5), sowie zu überwachende Gleichrichtereinheiten (3) durch einen Maschinennutzer oder durch eine externe Steuerung ausgewählt und zu sog. aktiven Sets gruppiert werden
- in einem siebten Schritt für jedes aktive Set ein zeitsynchroner Start- und Stopp-Befehl zu einer Energieerfassung gegeben wird
- in einem achten Schritt Istwerte für eine von einer Gleichrichtereinheit (3) aufgenommenen elektrischen Energie W dc el und eine abgestrahlte thermische Energie W therm dc für jedes aktive Set aufgenommen werden
- in einem neunten Schritt für alle Wechselstrommotoren (2) eine aufgenommene elektrische Energie W mot el und eine von jedem Wechselstrommotor (2) abgegebene mechanische Leistung W mech und eine abgestrahlte thermische Energie W therm mot in jedem aktiven Set berechnet wird
- in einem zehnten Schritt für alle aktiven Sets eine gesamte aufgenommene elektrische Energie erfasst wird, indem z.B. die Leistungswerte W mot el um einen Korrekturfaktor für oder um einen Messwert des elektrischen Leistungsbedarfs des Inverters (4), des Regelbausteins (5), der Gleichrichtereinheit (3) und einer übrigen Elektronik erhöht wird und eine gesamte abgestrahlte thermische Energie aus einer Bremsleitung P und Rechenwerten oder Schätzwerten für eine Energieabstrahlung des Inverters (4), des Regelbausteins (5), der Gleichrichtereinheit (3) und der übrigen Elektronik summiert wird und die abgegebene mechanische Leistung der einzelnen Wechselstrommotoren (2) zu einer abgegebenen mechanischen Gesamtleistung aller Wechselstrommotoren (2) aufsummiert wird
- in einem elften Schritt ein Wirkungsgrad für jedes aktive Set berechnet wird und
- in einem zwölften Schritt der Wert des Wirkungsgrades angezeigt wird.

## Claims

1. Machine comprising a plurality of controllable electrical drives and registration and storage of the power and energy values, consisting of
- a mechanism (1)
- a plurality of a.c. motors (2) for driving the mechanism (1)
- at least one rectifier unit (3), by means of which a direct current voltage U dc is generated from the mains voltage U mains
- an inverter (4) in each case, by means of which a three-phase current I mot is taken from the rectifier unit (3) for supplying an a.c. motor (2) in each case
- a control module (5) for actuating the associated inverter (4), which
i. detects the current value of the current I mot in at least one phase of the a.c. motor (2)
ii. detects the current value of the d.c voltage U dc
iii. determines the current value of a power P mot el, which is taken from the a.c. motor (2) and an electrical power W mot, which is consumed in a particular time period, and
iv. loads them in a drive data-storage (52)
**characterised in that**
- at least one a.c. motor (2) is a permanently excited synchronous motor (21)
- a rotating electrical encoder (22) is connected to the shaft of the synchronous motor (21) or to a part of the mechanism (1) that is driven thereby
- the control module (5) derives an angular velocity ω mot either by evaluating the signal of the encoder (22) or alternatively from a rotational speed setpoint value
- the controller module (5) computes a mechanical power P mech, which is output or consumed by the synchronous motor (21), from, in each case, the values of the current I mot, the angular velocity ω mot and a torque constant kT of the synchronous motor (21)
- the values in each case for P mech are saved in a drive data storage (52), which is assigned in each case, and calculated and stored with respect to a particular time period and to a consumed or output energy W mech
- the values for P mech and W mech are retrieved from a centralized power registration point (7) and evaluated, the power registration point (7) also registering and monitoring a power demand of heating and cooling systems that are intrinsic to the machine.

2. Machine according to claim 1, **characterised in that**, in the shortest possible time for the control module (5), it computes the output amount of mechanical energy and stores it in the drive data storage (52) as a mechanical energy increment dW output by the motor.

3. Machine according to one of the preceding claims, **characterised in that**, a time point, in each case, of the measurement of the mechanical power P mech or of the energy increment dW is mechanically registered and saved in the drive data storage (52).

4. Machine according to one of the preceding claims, **characterised in that**, in the rectifier unit (3), an intermediate circuit (33) is present, which calculates the values in each case
- of the d.c. voltage U dc
- of a current flowing in the rectifier unit
- of a current I brake flowing into a braking resistance (31) and, from this
- Computes a braking power P brake flowing into the braking resistance (31)
- for a specific period a braking energy W brake
- an electrical power P dc el consumed by the rectifier unit (3)
and
- saves the values together with the measurement time point in each case in an intermediate circuit data storage (32), which
- retrieves and evaluates the central power registration point (7).

5. Machine according to any one of the preceding claims, **characterised in that** the power registration point (7) is integrated in a central control means (6), which is connected via a data bus to the control modules (5) and to the intermediate circuit storages (33).

6. Machine according to claim 4 or 5, **characterised in that**, the power registration point (7) determines some or all of the following values
- mean values of the powers at determined time periods
- peak values of the powers at determined time periods
- mean values or peak values of the powers within a cyclically recurring interval for some or all of the following parameters
- the mechanical power P mech consumed or output by one of the a.c. current motors (2)
- the electrical power P mot el consumed by one of the d.c. current motors (2)
- an electrical power P dc el consumed by the rectifier unit (33)
- the thermal power P brake, which is converted into heat in one of the brake resistances (31)
- a heat P therm that is radiated as loss
- as well as, additionally, energy amounts resulting from integration of the power values for a particular time period, as energy values
and stores them or transmits them to other devices, such as, for example, a PC.

7. Machine according to one of claims 4-6, **characterised in that** the power registration point (7) is prepared such that it can be preselected by a machine user or by an external sequence controller,
- for which rectifier units (3) the consumed electrical power P dc el, the consumed electrical energy W dc el, the thermal power W brake that is radiated by the brake resistances (31), the total output thermal energy P therm or the total output thermal energy (P therm) or the total output thermal power W therm and
- for which d.c. motors (2), the mechanical energy P mech is output to the mechanism (1), the consumed electrical energy P mot el, the power W mech that is output to the mechanism (1) or the electrical power W mot el that is consumed are registered and stored at a point in time during a time period, at a cyclically recurring point in time or during cyclically recurring time periods, and the selected a.c. motors (2) or rectifier units (3) can be grouped into so-called active sets.

8. Machine according to claim 7, **characterised in that** the points in time, time periods or cyclically recurring points in time or time periods at or during which the power registration point (7) registers or saves power values or, in the case of time periods, also energy values, are selectable.

9. Method for registering and saving the power and energy values of a machine with a plurality of controllable, electrical drives, which were constructed of:
- a mechanism (1)
- a plurality of a.c. motors (2) for driving the mechanism (1)
- at least one rectifier unit (3), by means of which a direct current voltage U dc is generated from the mains voltage U mains
- an inverter (4) in each case, by means of which a three-phase current I mot is drawn from the rectifier unit (3) for supplying an a.c. motor (2) in each case
- a control module (5) for actuating the associated inverter (4), which
i. detects the current value of the current I mot in at least one phase of the a.c. motor (2)
ii. detects the current value of the d.c voltage U dc
iii. determines the current value of a power P mot el, which is consumed by the a.c. motor (2) and an electrical power W mot, which is consumed in a particular time period, and
iv. loads them in a drive data-storage (52)
- wherein at least one a.c. motor (2) is chosen as a permanently excited synchronous motor (21)
- a rotating electrical encoder (22) is connected to the shaft of the synchronous motor (21) or to a part of the mechanism (1) that is driven thereby
- the control module (5) derives an angular velocity ω mot either by evaluating the signal of the encoder (22) or alternatively from a rotational speed setpoint value
- the controller module (5) computes a mechanical power P mech, which is output or consumed by the synchronous motor (21), from, in each case, the values of the current I mot, the angular velocity ω mot and a torque constant kT of the synchronous motor (21)
- the values in each case for P mech are saved in a drive data storage (52), which is assigned in each case, and calculated and stored with respect to a particular time section and to a consumed or output energy W mech
- the values for P mech and W mech are retrieved from a centralized power registration point (7) and evaluated, the power registration point (7) also registering and monitoring a power demand of heating and cooling systems that are intrinsic to the machine,
**characterised in that**
- in a first step the possible calculation of all instantaneous power values P dc el, P mot el, P mech und P therm is performed automatically in control modules (5) and if appropriate intermediate circuit computers (33) of the machine
- in a second step it is checked whether an energy registration means is activated,
- in a third step, a computation of, in each case, energy increments dW dc el, dW mot el, dW mech and dW therm in a shortest possible time span for the control modules (5) and for the intermediate circuit computer (33)
- in a fourth step the calculated energy increments are added up to form energy values and
- in a fifth step, the thus obtained energy values are saved and then step one is commenced again.

10. Method according to claim 9, **characterised in that**
- drives to be monitored in a sixth step, consisting of an a.c. motor (2) in each case and an inverter (4) and a control module (5) as well as rectifier units (3) to be monitored are selected by a machine user or by an external control means and grouped into so-called active sets
- in a seventh set for each active set, a time-synchronous start and stop command is transmitted to an energy registration means
- in an eighth step, actual values for an electrical energy W dc el consumed by a rectifier unit (3) and a radiated thermal energy W therm dc is consumed for each active set
- in a ninth step for all a.c. motors (2) a consumed electrical energy W mot el and a mechanical power W mech output by each a.c. motor (2) and a radiated thermal energy W therm mot are computed in each active set
- in a tenth step for all active sets a total consumed electrical energy is registered **in that**, for example, the power value W mot el is increased by a correction factor for or by a measurement value of the electrical power demand of the inverter (4), the control module (5) the rectifier unit (3) and other electronics and a total radiated thermal energy from a brake line P and computed values or estimated values for an energy radiation of the inverter (4), the control module (5), the rectifier unit (3) and the other electronics is summated and the output mechanical power of the individual a.c. motors (2) is summated to form a total output mechanical power of all a.c. motors (2)
- in an eleventh step an efficiency for each active set is computed and
- In a twelfth step the value of the efficiency is displayed.

## Revendications

1. Machine possédant plusieurs entraînements électriques régulables et relevé et enregistrement des valeurs de puissance et d'énergie, consistant en
- un système mécanique (1)
- plusieurs moteurs à courant alternatif (2) destinés à entraîner le système mécanique (1)
- au moins une unité de redresseur (3) au moyen de laquelle une tension continue U dc est générée à partir de la tension de secteur U secteur
- à chaque fois un inverseur (4) à travers lequel un courant triphasé I mot est prélevé de l'unité de redresseur (3) pour alimenter à chaque fois un moteur à courant alternatif (2)
- à chaque fois un composant de régulation (5) destiné à commander l'inverseur correspondant (4), qui
i. enregistre la valeur actuelle du courant I mot dans au moins une phase du moteur à courant alternatif (2)
ii. enregistre la valeur actuelle de la tension continue U dc
iii. détermine la valeur actuelle d'une puissance P mot el réceptionnée du moteur à courant alternatif (2) et une puissance électrique W mot el réceptionnée sur une certaine période, et
iv. lit dans une mémoire des données d'entraînement (52)
**caractérisée par les faits que**
- au moins un moteur à courant alternatif (2) est un moteur synchrone (21) excité en permanence
- un encodeur électrique rotatif (22) relié à l'arbre du moteur synchrone (21) ou avec une partie du système mécanique (1) entraîné par ce dernier
- le composant de régulation (5) déduit une vitesse angulaire ω mot, par évaluation des signaux de l'encodeur (22) ou alternativement d'une valeur de consigne de régime
- le composant de régulation (5) calcule une puissance mécanique P méc fournie ou reçue par le moteur synchrone (21) à partir des différentes valeurs de l'intensité I mot, de la vitesse angulaire ω mot et d'une constante de couple de serrage kT du moteur synchrone (21)
- les différentes valeurs pour P méc étant enregistrées dans une mémoire des données d'entraînement (52) correspondantes à chaque fois et calculées et enregistrées par rapport à un certain laps de temps et à une énergie W méc absorbée ou fournie
- les valeurs pour P méc et W méc étant appelées et évaluées depuis un point central de relevé de puissance (7), sachant que le point de relevé de puissance (7) saisit et surveille également un besoin en puissance des groupes de chauffage et de refroidissement propres à la machine.

2. Machine selon la revendication 1, **caractérisée par le fait que**, dans le temps le plus court possible pour le composant de régulation (5), la quantité d'énergie mécanique fournie est calculée et est enregistrée en tant qu'incrément d'énergie mécanique dW fourni par le moteur dans la mémoire des données d'entraînement (52).

3. Machine selon une des revendications précédentes, **caractérisée par le fait qu'**un moment respectif de la mesure de la puissance mécanique P méc ou de l'incrément d'énergie dW méc est saisi et enregistré dans la mémoire des données d'entraînement (52).

4. Machine selon une des revendications précédentes, **caractérisée par le fait que** l'unité de redresseur (3) contient une calculatrice de circuit intermédiaire (33) qui saisit les différentes valeurs
- de la tension continue U dc
- d'une intensité s'écoulant dans l'unité de redresseur
- d'une intensité I frein coulant dans une résistance de freinage (31) et calcule à partir de là
- une puissance de freinage P frein coulant dans la résistance de freinage (31)
- une énergie de freinage W frein pour une période donnée
- une puissance électrique P dc el absorbée par l'unité de redresseur (3)
et
- enregistre les valeurs en même temps qu'un moment de mesure afférent dans une mémoire de circuit intermédiaire (32), lequel
- appelle et évalue le point de relevé de puissance (7).

5. Machine selon une des revendications précédentes, **caractérisée par le fait que** le point de relevé de puissance (7) est intégré dans une commande centrale (6) qui est reliée par l'intermédiaire d'un bus de données avec les composants de régulation (5) et avec la mémoire de circuit intermédiaire (33).

6. Machine selon la revendication 4 ou 5, **caractérisée par le fait que** le point de relevé de puissance (7) détermine et enregistre tout ou partie des valeurs suivantes :
- les valeurs moyennes des puissances dans certains laps de temps
- les valeurs de pointe des puissances dans certains laps de temps
- les valeurs moyennes ou valeurs de pointe des puissances à l'intérieur d'un intervalle cyclique récurrent pour tout ou partie des grandeurs suivantes
- la puissance mécanique P méc absorbée ou fournie par un des moteurs à courant alternatif (2)
- la puissance électrique P mot el absorbée par un des moteurs à courant alternatif (2)
- la puissance électrique P dc el absorbée par une des unités de redresseur (33)
- la puissance thermique P frein convertie en chaleur dans une des résistances de freinage
- une chaleur P therm rayonnée en perte
- ainsi que les quantités d'énergie résultant en tant que valeurs d'énergie par intégration des valeurs de puissance pour un certain laps de temps
ou bien les transmet à d'autres appareils, comme p. ex. un PC.

7. Machine selon une des revendications 4-6, **caractérisée par le fait que** le point de relevé de puissance (7) est préparé de manière à pouvoir être préalablement sélectionné par un utilisateur de la machine ou par une commande de déroulement externe,
- pour laquelle des unités de redresseur (3) la puissance électrique P dc el absorbée, l'énergie électrique W dc el absorbée, la puissance thermique W frein rayonnée par les résistances de freinage (31), l'énergie thermique P therm fournie en tout ou l'énergie thermique fournie en tout (P therm) ou la puissance thermique W therm fournie en tout et
- pour quels moteurs à courant alternatif (2) l'énergie mécanique P méc fournie au système mécanique (1), l'énergie électrique P mot el absorbée, la puissance mécanique W méc fournie au système mécanique (1) ou la puissance électrique W mot el absorbée
à un moment donné, pendant un laps de temps, à un moment récurrent de façon cyclique ou pendant des laps de temps récurrents de façon cyclique sont saisis et enregistrés, les moteurs à courant alternatif (2) ou unités de redresseur (3) sélectionnés à cette occasion pouvant être rassemblés en ce qu'on appelle des jeux actifs.

8. Machine selon la revendication 7, **caractérisée par** les moments, les laps de temps ou les moments récurrents de façon cyclique auxquels ou pendant lesquels le point de relevé de puissance (7) saisit et enregistre les valeurs de puissance ou, dans le cas de laps de temps, également les valeurs d'énergie.

9. Procédé destiné à saisir et à enregistrer les valeurs de puissance et d'énergie d'une machine possédant plusieurs entraînements électriques régulables qui ont été constitués :
- d'un système mécanique (1)
- de plusieurs moteurs à courant alternatif (2) destinés à entraîner le système mécanique (1)
- d'au moins une unité de redresseur (3) qui génère une tension continue U dc à partir de la tension de secteur U secteur
- à chaque fois un inverseur (4) à travers lequel un courant triphasé I mot est prélevé de l'unité de redresseur (3) pour alimenter à chaque fois un moteur à courant alternatif (2)
- à chaque fois un composant de régulation (5) destiné à commander l'inverseur correspondant (4), qui
i. enregistre la valeur actuelle du courant I mot dans au moins une phase du moteur à courant alternatif (2)
ii. enregistre la valeur actuelle de la tension continue U dc
iii. détermine la valeur actuelle d'une puissance P mot el réceptionnée du moteur à courant alternatif (2) et une puissance électrique W mot el réceptionnée sur une certaine période, et
iv. lit dans une mémoire des données d'entraînement (52)
- sachant qu'au moins un moteur à courant alternatif (2) a été choisi comme moteur synchrone (21) excité en permanence
- un encodeur électrique rotatif (22) relié à l'arbre du moteur synchrone (21) ou mit avec une partie du système mécanique (1) entraîné par ce dernier
- le composant de régulation (5) déduit une vitesse angulaire ω mot soit par évaluation des signaux de l'encodeur (22) ou alternativement d'une valeur de consigne de régime
- le composant de régulation (5) calcule une puissance mécanique P méc fournie ou reçue par le moteur synchrone (21) à partir des différentes valeurs de l'intensité I mot, de la vitesse angulaire ω mot et d'une constante de couple de serrage kT du moteur synchrone (21)
- les différentes valeurs pour P méc étant enregistrées dans une mémoire des données d'entraînement (52) correspondantes à chaque fois et calculées et enregistrées par rapport à un certain laps de temps et à une énergie W méc absorbée ou fournie
- les valeurs pour P méc et W méc étant appelées et évaluées depuis un point central de relevé de puissance (7), sachant que le point de relevé de puissance (7) saisit et surveille également un besoin en puissance des groupes de chauffage et de refroidissement propres à la machine.
**caractérisé par le fait que**
- dans une première étape, le calcul éventuel de toutes les valeurs de puissance P dc el, P mot el, P méc et P therm momentanées se fait automatiquement dans les composants de régulation (5) et le cas échéant les calculateurs de circuit intermédiaire (33) de la machine
- dans une deuxième étape, on contrôle si un relevé d'énergie est activé
- dans une troisième étape un calcul des incréments d'énergie dW dc el, dW mot el, dW méc et dW therm a lieu dans chacun des composants de régulation (5) dans un laps de temps aussi court que possible pour les calculateurs de circuit intermédiaire (33)
- dans une quatrième étape les incréments d'énergie calculés sont ajoutés aux valeurs d'énergie et
- dans une cinquième étape les valeurs d'énergie ainsi obtenues sont enregistrées,
tout recommençant ensuite à l'étape un.

10. Procédé selon la revendication 9, **caractérisé par le fait que**
- dans une quatrième étape les entraînements à surveiller, consistant chacun en un moteur à courant alternatif (2), un inverseur (4) et un composant de régulation (5), ainsi que les unités de redresseur (3) à surveiller sont sélectionnés et regroupés en ce qu'on appelle des jeux actifs par un utilisateur de la machine ou par une commande externe
- dans une septième étape, un ordre de démarrage et d'arrêt synchronisé de relevé de l'énergie est donné pour chaque jeu actif
- dans une huitième étape les valeurs réelles pour l'énergie électrique W dc el absorbée par une unité de redresseur (3) et une énergie thermique W therm dc rayonnées est réceptionnée pour chaque jeu actif
- dans une neuvième étape, une énergie électrique W mot el absorbée, une puissance mécanique W méc fournie par chaque moteur à courant alternatif (2) et une énergie thermique W therm mot rayonnée est calculée dans chaque jeu actif pour tous les moteurs à courant alternatif (2)
- dans une dixième étape, une énergie électrique totale est relevée pour tous les jeux actifs, en augmentant p. ex. les valeurs de puissance W mot el d'un facteur de correction pour ou d'une valeur de mesure du besoin en puissance électrique de l'inverseur (4), du composant de régulation (5), de l'unité de redresseur (3) et du reste du système électronique, une énergie thermique rayonnée totale étant additionnée à partir de la puissance de freinage P et des valeurs calculées ou estimées pour un rayonnement d'énergie de l'inverseur (4), du composant de régulation (5), de l'unité de redresseur (3) et du reste du système électronique, la puissance mécanique fournie des différents moteurs à courant alternatif (2) étant additionnée en une puissance mécanique totale fournie de tous les moteurs à courant alternatif (2)
- dans une onzième étape, un rendement est calculé pour chaque jeu actif,
- la valeur de ce rendement étant affichée dans une douzième étape.
